# FASCICULE DE BREVET EUROPEEN

(11) **EP 4 395 616 B1**
(45) Date de publication et mention de la délivrance du brevet: **12.08.2026**
(21) Numéro de dépôt: 22762101.8
(22) Date de dépôt: 12.08.2022
(51) Int. Cl.: A47J 43/046

(54) **APPAREIL DE PRÉPARATION CULINAIRE ÉQUIPÉ DE MOYENS DE PESÉE**
LEBENSMITTELZUBEREITUNGSVORRICHTUNG MIT WIEGEMITTELN
FOOD PREPARATION APPLIANCE EQUIPPED WITH WEIGHING MEANS

(30) Priorité: 01.09.2021 FR 2109135
(43) Date de publication de la demande: 10.07.2024
(73) Titulaire: SEB S.A., 69130 Ecully (FR)
(72) Inventeur: DUSSART, Marie, 69134 Ecully Cedex (FR); TURPIN, Romain, 69134 Ecully Cedex (FR)
(74) Mandataire: SEB Développement
(86) Numéro de dépôt international: PCT/EP2022/072664
(87) Numéro de publication internationale: WO 2023/030865

(56) Documents cités:
- EP-A1- 0 561 259
- EP-A1- 3 398 495
- WO-A1-2013/118369
- DE-A1- 102019 211 310

## Description

### Domaine technique de l'invention

La présente invention concerne de manière générale un appareil de préparation culinaire qui comprend une cuve de travail pour des aliments à préparer et des moyens de pesée, agencés pour peser les aliments reçus dans la cuve de travail.

### État de la technique

Dans l'art antérieur des appareils de préparation culinaire, on connait par exemple le document EP0561259A1 qui divulgue un appareil de préparation culinaire équipé de moyens de pesée, sous la forme de jauges de contraintes collées sur un barreau de pesée. En contrepartie, ce système peut présenter dans le temps des dérives dans la précision des mesures de pesée, en raison de trop nombreuses ou trop importantes déformations imposées par des mises en charge de l'appareil. Un autre exemple d'appareil de préparation culinaire de l'état de l'art équipé de moyens de pesée est divulgué dans WO 2013/118369.

### Exposé de l'invention

Un but de la présente invention est de répondre aux inconvénients de l'art antérieur mentionnés ci-dessus et en particulier, tout d'abord, de proposer un appareil de préparation culinaire équipé de moyens de pesée dont la précision des mesures de pesée dans le temps reste fiable et répétable.

Pour cela un premier aspect de l'invention concerne un appareil de préparation culinaire comprenant :
- un boîtier avec au moins un pied d'appui agencé pour reposer sur un plan de travail,
- une cuve de travail agencée pour recevoir des aliments à préparer,
- des moyens de pesée agencés pour peser des aliments à préparer reçus dans la cuve de travail,
caractérisé :
en ce que l'au moins un pied d'appui comprend des moyens de suspension comprenant :
   - une partie d'appui sur le plan de travail,
   - une partie d'ancrage reliée à une portion de fixation de pied du boîtier, et
   - des moyens de rappel élastiques disposés entre la partie d'appui et la partie d'ancrage ,
les moyens de suspension étant agencés pour permettre un débattement de la partie d'appui par rapport à la partie d'ancrage ,
en ce que l'appareil de préparation comprend des moyens de butée pour limiter le débattement de la partie d'appui par rapport à la partie d'ancrage , et en ce que les moyens de pesée sont fixés entre la partie d'appui et la portion de fixation de pied du boîtier.

**Selon** la mise en œuvre ci-dessus, l'appareil de préparation culinaire comprend, au niveau du pied d'appui, des moyens de suspension avec une partie d'ancrage solidaire du boîtier et une partie d'appui mobile par rapport la partie d'ancrage. Des moyens de butée sont prévus pour limiter le débattement de la partie d'appui, et les moyens de pesée sont agencés entre la partie d'appui et la fixation de la partie d'ancrage sur le boîtier. Ainsi, plus la charge appliquée est importante, alors plus le débattement est important et plus les moyens de pesée sont contraints. Avec cette mise en œuvre, une surcharge appliquée sur le boîtier provoquerait normalement une surcharge sur les moyens de pesée et une déformation allant au-delà de la plage d'utilisation normale, mais les moyens de butée limitent le débattement et donc préservent les moyens de pesée. Autrement dit, au-delà d'un effort seuil appliqué sur le boitier, les moyens de butée entrent en action pour limiter le débattement et empêcher la surcharge de passer par les moyens de pesée. Dans ce cas, les moyens de butée transmettent la surcharge directement du boitier à la partie d'appui. En d'autres termes, les moyens de butée, quand ils limitent le débattement de la partie d'appui en raison d'une surcharge sur le boîtier, forment la chaîne de transmission de la surcharge vers le plan de travail, et « court-circuitent » le chemin de passage de l'effort passant normalement par les moyens de pesée lorsque les efforts en cause sont inférieurs à un effort seuil.

Selon un mode de réalisation, la partie d'appui comprend un patin d'appui agencé pour reposer sur le plan de travail.

Selon un mode de réalisation, la partie d'ancrage comprend une ossature fixée, encastrée sur le boîtier qui supporte la partie d'appui selon une liaison qui laisse au moins un degrés de liberté entre la partie d'ancrage et la partie d'appui. La liaison peut être une articulation avec des pièces en mouvement les unes par rapport aux autres (par exemple des liaisons glissière, pivot, pivot glissant, rotule, avec ou sans jeu, des liaisons qui ne tombent pas sous les définitions précédentes mais permettent un débattement par rapport aux pièces). On peut envisager des articulations avec des pièces rigides qui ne se déforment pas ou se déforment peu et se déplacent les unes par rapport aux autres, mais on peut aussi envisager des liaisons avec des pièces élastiques qui se déforment, comme des lames ressort par exemple.

Selon un mode de réalisation, les moyens de suspension sont agencés pour permettre un débattement axial de la partie d'appui par rapport à la partie d'ancrage selon une direction normale au plan de travail, les moyens de butée comprenant des moyens de butée axiaux pour limiter le débattement axial de la partie d'appui par rapport à la partie d'ancrage au-delà d'une première force prédéterminée, notamment lors d'une surcharge appliquée sur le boîtier ou sur la cuve de travail. Le débattement axial est typiquement provoqué par l'application d'une quantité trop importante d'aliments dans la cuve de travail, et/ou par un appui vertical généré par un utilisateur (pour fermer un couvercle ou pour installer la cuve de travail si elle est amovible par exemple). La direction axiale est ici typiquement la verticale ou la direction d'application du poids.

Selon un mode de réalisation, les moyens de butée axiaux comprennent une partie de butée solidaire du boitier ou de la partie d'ancrage, ladite partie de butée étant agencée pour buter sur une portion de la partie d'appui afin de limiter le débattement axial de la partie d'appui relativement à la partie d'ancrage. Un contact surfacique permet de limiter les appuis ponctuels et les déformations de la matière générées par des pressions de contact trop grandes.

Selon un mode de réalisation, la portion de la partie d'appui forme une collerette périphérique définissant un contour de la partie d'appui sur lequel vient buter ladite partie de butée. La mise en butée est fiable et ne requiert pas des surfaces de grandes précisions, puisque tout le pourtour peut servir de butée.

Selon un mode de réalisation, les moyens de butée axiaux comprennent une partie de butée solidaire du boitier ou de la partie d'ancrage, ladite partie de butée étant agencée pour buter sur le plan de travail afin de limiter le débattement axial de la partie d'appui relativement à la partie d'ancrage. La partie de butée peut directement entrer en contact avec le plan de travail, ce qui peut procurer une structure simple.

Selon un mode de réalisation :
- le boîtier ou la partie d'ancrage comprennent un puits de pied formant un habillage au moins partiel pour le pied d'appui, avec un contour d'extrémité inférieure formant les moyens de butée axiaux. Un tel puits de pied permet de masquer la majeure partie du pied, pour proposer un appareil de belle apparence et facile à entretenir.

Selon un mode de réalisation, l'appareil de préparation culinaire comprend des moyens de butée axiaux secondaires comprenant :
- une butée secondaire de pied solidaire de la partie d'appui,
- une butée secondaire de boîtier solidaire du boîtier,
la butée secondaire de pied étant agencée pour entrer en butée avec la butée secondaire de boîtier pour limiter le débattement axial de la partie d'appui en dessous d'une deuxième force prédéterminée, notamment lors d'une absence de charge appliquée sur le boîtier ou la cuve de travail.

Selon un mode de réalisation, la butée secondaire de pied comprend un épaulement agencé pour interagir avec un épaulement de la butée secondaire de boîtier. Les épaulements mentionnés peuvent s'étendre radialement vers l'intérieur comme vers l'extérieur dans le cas de pièces de révolution.

Selon un mode de réalisation, les moyens de suspension sont agencés pour permettre un débattement latéral de la partie d'appui par rapport à la partie d'ancrage selon une direction latérale ou tangentielle au plan de travail, les moyens de butée comprenant des moyens de butée latéraux entre le pied d'appui et le boîtier pour limiter le débattement latéral de la partie d'appui par rapport à la partie d'ancrage, notamment lors d'un déplacement latéral de l'appareil de préparation culinaire sur le plan de travail. Limiter le débattement radial, transverse ou latéral permet de garantir l'absence de surcharges ou de perturbations lors d'un déplacement latéral (l'utilisateur faisant glisser l'appareil sur le plan de travail) ou lors dans le cas d'une préparation avec un outil de travail tournant qui génère des vibrations latérales en raison d'un balourd ou d'un déséquilibre dans les masses en rotation.

**Selon** un mode de réalisation, les moyens de butée latéraux sont agencés sur la paroi latérale du puits de pied du boitier ou de la partie d'ancrage, la partie d'appui étant agencée pour buter sur ladite paroi latérale du puits de pied afin de limiter le débattement latéral de la partie d'appui relativement à la partie d'ancrage. Autrement dit, c'est la paroi interne latérale du puits de pied (typiquement en forme de tube) qui sert de butée à la partie d'appui.

Selon un mode de réalisation, les moyens de rappel élastiques comprennent un ressort de compression agencé pour exercer un effort de suspension prédéterminé pour repousser la partie d'appui de la partie d'ancrage selon une direction normale au plan de travail.

Selon un mode de réalisation, la partie d'ancrage comprend un logement axial pour le ressort de compression, et le ressort de compression forme un logement ou un positionnement pour une partie supérieure de la partie d'appui, ces éléments étant agencés pour imposer une position neutre ou position d'équilibre à la partie d'appui relativement à la partie d'ancrage, selon au moins une direction latérale ou tangentielle au plan de travail. On peut envisager des pions de centrage ou des puits ou lamages de centrage pour recevoir le ressort de compression.

Selon un mode de réalisation, le ressort de compression est agencé entre les moyens de pesée et la partie d'appui.

Selon un mode de réalisation, la partie d'ancrage comprend au moins un barreau de pesée agencé pour se déformer en flexion lors de l'application d'une charge sur le boîtier ou la cuve de travail. Un tel barreau de pesée forme typiquement une poutre avec une première extrémité fixée au boîtier et une deuxième extrémité fixée ou reliée à la partie d'appui. Le barreau de pesée peut comprendre une partie amincie pour favoriser une zone à déformabilité locale, où sera fixé un capteur de déformation par exemple.

Selon un mode de réalisation, le barreau de pesée est directement fixé sur la portion de fixation de pied du boîtier. On peut prévoir une liaison de type encastrement, avec une fixation par vis.

Selon un mode de réalisation, les moyens de pesée comprennent au moins une jauge de contrainte ou un capteur d'effort, ou un capteur piézoélectrique.

Selon un mode de réalisation, l'appareil de préparation culinaire peut comprendre des moyens de travail comprenant au moins un outil de travail et un moteur d'entraînement agencé pour entraîner l'outil de travail en mouvement dans la cuve de travail de sorte à travailler les aliments à préparer reçus dans la cuve de travail, et/ou des moyens de cuisson agencés pour cuire ou chauffer les aliments à préparer reçus dans la cuve de travail.

### Selon un mode de réalisation,

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente une vue de face d'un appareil de préparation culinaire sur un plan de travail, comprenant des pieds d'appui avec des moyens de suspension ;
[fig. 2] représente une vue de dessous de l'appareil de préparation culinaire de la figure 1 ;
[fig. 3] représente une vue en coupe d'un pied d'appui de l'appareil de préparation culinaire de la figure 1 ;
[fig. 4] représente le pied d'appui de la figure 3, lorsque l'appareil de préparation culinaire est soulevé du plan de travail ;
[fig. 5] représente le pied d'appui de la figure 3, lorsque l'appareil de préparation culinaire repose sur le plan de travail, sous des conditions normales de chargement ;
[fig. 6] représente le pied d'appui de la figure 3, lorsque l'appareil de préparation culinaire repose sur le plan de travail, sous des conditions de chargement avec une surcharge ;
[fig. 7] représente un pied d'appui selon une mise en œuvre alternative du mode de réalisation de la figure 3, lorsque l'appareil de préparation culinaire est soulevé du plan de travail ;
[fig. 8] représente la mise en œuvre alternative de la figure 7, lorsque l'appareil de préparation culinaire repose sur le plan de travail, sous des conditions normales de chargement ;
[fig. 9] représente la mise en œuvre alternative de la figure 7, lorsque l'appareil de préparation culinaire repose sur le plan de travail, sous des conditions de chargement avec une surcharge.

### Description détaillée de mode(s) de réalisation

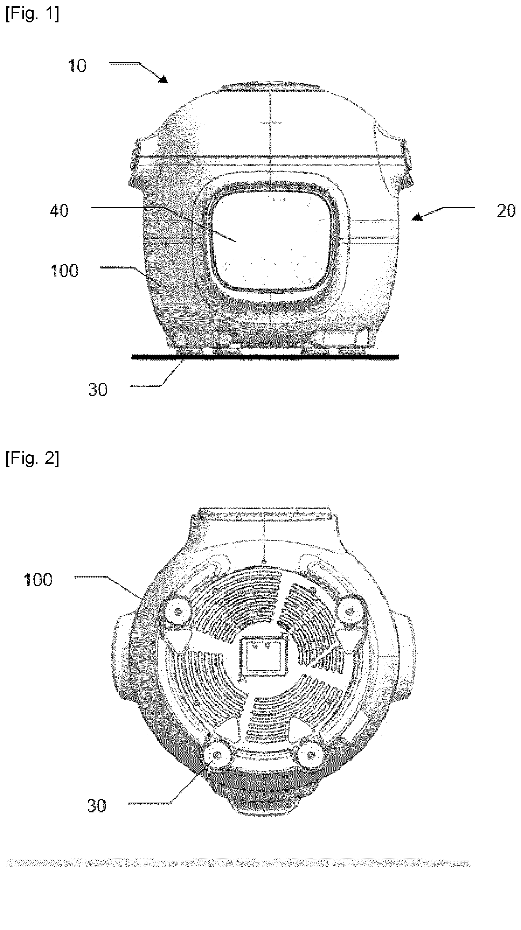

La figure 1 représente de manière générale un appareil de préparation culinaire comprenant un corps de base 20 coiffé par un couvercle 10, et reposant sur un plan de travail via des pieds d'appui 30. Un boîtier 100 forme la carcasse de l'appareil de préparation culinaire et présente une paroi externe dotée d'un écran d'affichage et de commande 40.

L'appareil de préparation culinaire peut comprendre une cuve de travail pour recevoir des aliments à préparer. Dans certaines mises en œuvre, on peut prévoir des moyens de travail avec un ou plusieurs outils de travail pour effectuer diverses opérations (malaxage, hachage, découpage, mélange...). Dans certaines mises en œuvre, on peut prévoir des moyens de chauffage pour cuire ou réchauffer les aliments.

**La** figure 2 représente l'appareil de préparation culinaire de la figure 1 vu de dessous, pour bien montrer les quatre pieds d'appui 30 répartis sous la face inférieure du boîtier 100.

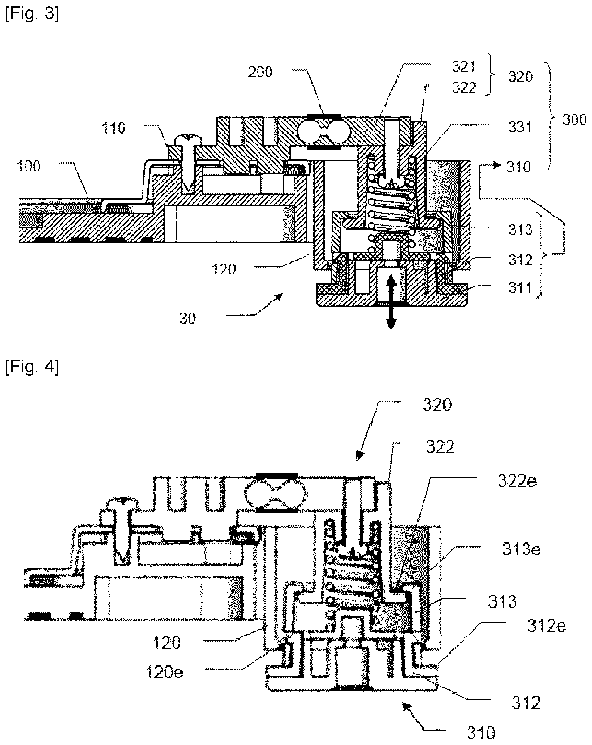

La figure 3 représente une coupe d'une première mise en œuvre des pieds d'appui 30 de l'appareil de préparation culinaire. D'une manière générale, le pied d'appui 30 comprend des moyens de suspension 300 qui comprennent :
- une partie d'ancrage 320 reliée et fixée au boîtier 100, et
- une partie d'appui 310 mobile par rapport à la partie d'ancrage 320, et agencée pour contacter le plan de travail,
- des moyens de rappel élastiques, ici un ressort de compression 331.

Le boîtier 100 comprend un puits de pied 120 qui reçoit presque complétement le pied d'appui 30, dont seule la partie inférieure dépasse du boîtier 100.

Dans le détail, la partie d'ancrage 320 comprend :
- un barreau de pesée 321,
- un plot d'ancrage 322,
dans lequel le barreau de pesée 321 est fixé d'une part sur une portion de fixation de pied 110 du boîtier 100, et supporte d'autre part le plot d'ancrage 322. Une zone évidée est prévue approximativement au milieu du barreau de pesée 321.

La partie d'appui 310 comprend quant à elle :
- un patin d'appui 311 agencée pour contacter le plan de travail,
- une entretoise 312 recevant le patin d'appui 311,
- une douille 313 dans laquelle l'entretoise 312 est clipsée.

Le ressort de compression 331 est intercalé entre la partie d'ancrage 320 et la partie d'appui 310, et il est reçu dans une gorge circulaire interne du plot d'ancrage 322, et sur un bossage supérieur de l'entretoise 312.

Comme cela sera expliqué en détail figures 4 à 6, la partie d'appui 310 peut se déplacer par rapport à la partie d'ancrage 320 et l'appareil de préparation comprend des moyens de butée pour limiter le débattement de la partie d'appui 310 par rapport à la partie d'ancrage 320 lorsque la charge devient trop importante au-delà d'un seuil prédéterminé.

D'une manière générale, les moyens de butée sont prévus pour limiter le débattement de la partie d'appui 310 par rapport à la partie d'ancrage 320.

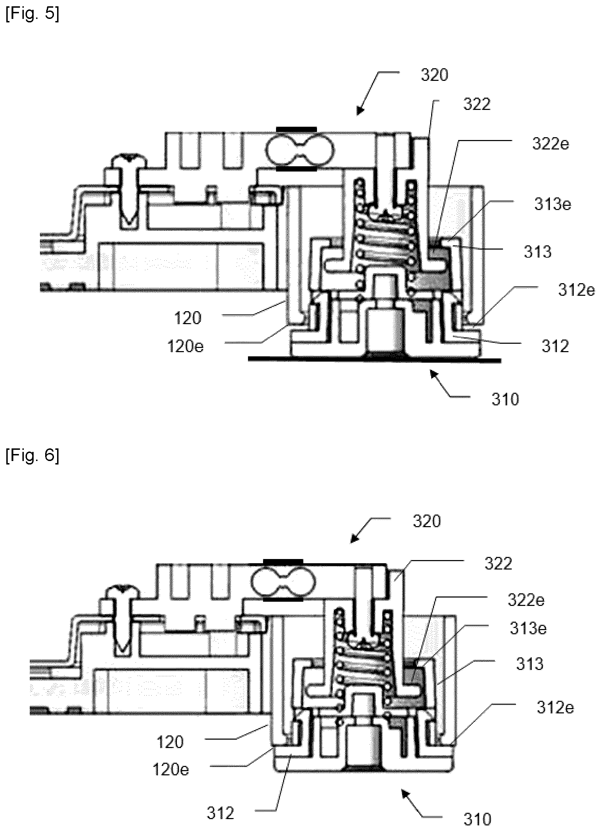

Dans le cas d'une surcharge axiale (selon la direction verticale de la figure 3), le boitier 100 entre en butée avec la partie d'appui 310. Dans le détail, la portion inférieure du puits de pied 120 est agencée pour contacter la surface épaulée supérieure de l'entretoise 312. Cela sera détaillé figure 6.

Dans le cas d'une surcharge latérale (selon une direction horizontale de la figure 3), le boitier 100 entre en butée avec la partie d'appui 310. Dans le détail, une surface interne de portion inférieure du puits de pied 120 est agencée pour contacter une surface latérale de la douille 313.

Dans le cas où l'appareil est soulevé du plan de travail, la partie d'ancrage 320 entre en butée avec la partie d'appui 310. Dans le détail, un épaulement radial du plot d'ancrage 312 entre en contact avec un épaulement radial de la douille 313. Cela sera détaillé figure 4.

Des moyens de pesée 200 sont également intégrés au pied d'appui 30, ici sous la forme de jauges de contraintes collées sur le barreau de pesée 321 au niveau de sa partie évidée pour maximiser les déformations dans cette zone.

Comme expliqué ci-dessus, l'appareil de préparation comprend des moyens de butée pour limiter le débattement de la partie d'appui 310 par rapport à la partie d'ancrage 320, et les figures 4 à 6 représentent trois situations de chargement de l'appareil de préparation culinaire.

La figure 4 représente le pied d'appui de la figure 3, lorsque l'appareil de préparation culinaire est soulevé du plan de travail. Dans ce cas de figure, aucun effort n'est appliqué à la partie d'appui 310, si bien que le ressort de compression 331 est complètement détendu. Pour éviter que la partie d'appui ne sorte trop du puits de pied 120, un épaulement radial du plot d'ancrage 322 entre en butée avec un épaulement radial de la douille 313. En effet, une surface supérieure 322e du plot d'ancrage 322 est en contact avec une surface inférieure 313e de la douille 313.

**On** peut noter que le ressort de compression 331 contribue à centrer latéralement la partie d'appui 310 dans le puits de pied 120, si bien qu'un jeu latéral est régulièrement réparti entre la face interne latérale du puits de pied 120 et la face latérale de la douille 313.

La figure 5 représente le pied d'appui de la figure 3, lorsque l'appareil de préparation culinaire repose sur un plan de travail, sous des conditions normales de chargement. Dans ce cas, le ressort de compression 331 se trouve légèrement comprimé et un jeu est visible :
- entre la surface supérieure 322e du plot d'ancrage 322 et la surface inférieure 313e de la douille 313 ;
- entre une surface supérieure 312e de l'entretoise 312 et la surface inférieure 120e du puits de pied 120 ;
- entre une surface latérale de l'entretoise 312 et une surface latérale inférieure du puits de pied 120 .

En conséquence, tout le poids appliqué sur l'appareil de préparation culinaire passe par le pied d'appui 30, et en particulier par la partie d'ancrage 320. En conséquence, le barreau de pesée 321 supporte en flexion l'intégralité du poids et permet aux moyens de pesée de mesurer une force ou une variation de force appliquée sur le boîtier pour en déduire la masse des aliments reçus dans la cuve de travail. Ainsi, le barreau de pesée 321 est relié mécaniquement en série avec la partie d'appui 310 et avec la portion de fixation de pied 110 du boîtier 100.

**La** figure 6 représente le pied d'appui de la figure 3, lorsque l'appareil de préparation culinaire repose sur le plan de travail, sous des conditions de chargement avec une surcharge. Dans ce cas, le ressort de compression 331 est comprimé au-delà d'une force prédéterminée par la course (par exemple une force seuil de 50 N) et
- un jeu est visible entre la surface supérieure 322e du plot d'ancrage 322 et la surface inférieure 313e de la douille 313 ;
- aucun jeu n'est visible entre la surface supérieure 312e de l'entretoise 312 et la surface inférieure 120e du puits de pied 120.

**En** conséquence, tout l'effort supérieur à la force seuil de 50 N ne passe pas par le pied d'appui (et ne passe pas par la partie d'ancrage 320 en particulier), mais par le puits de boitier 120 qui est en butée avec la partie d'appui 310. Ainsi, les moyens de butée sont reliés mécaniquement en parallèle aux moyens de suspension 300 du pied d'appui 30.

En conséquence, le barreau de pesée 321 ne supporte que la force seuil appliquée par le ressort de compression 331 dont la course est limitée par la mise en butée du puits de pied 120 avec la partie d'appui 310. La surcharge des moyens de pesée 200 est évitée, car aucune déformation excessive du barreau de pesée 321 n'est possible. La précision de mesure est améliorée, ainsi que la répétabilité au cours du temps.

La situation d'une surcharge latérale n'est pas représentée, mais dans le cas où l'utilisateur fait glisser l'appareil de préparation culinaire sur le plan de travail, une surcharge latérale peut être appliquée sur la partie d'ancrage 320 et en particulier sur le barreau de pesée 321. Cette situation est évitée par le montage décrit, car la paroi latérale de la douille 313 va entrer en butée avec la paroi latérale intérieure du puits de pied 120, en raison de l'élasticité du ressort de compression 331. L'effort latéral sera donc repris par le boîtier 100 et ne passe pas par le barreau de pesée 321.

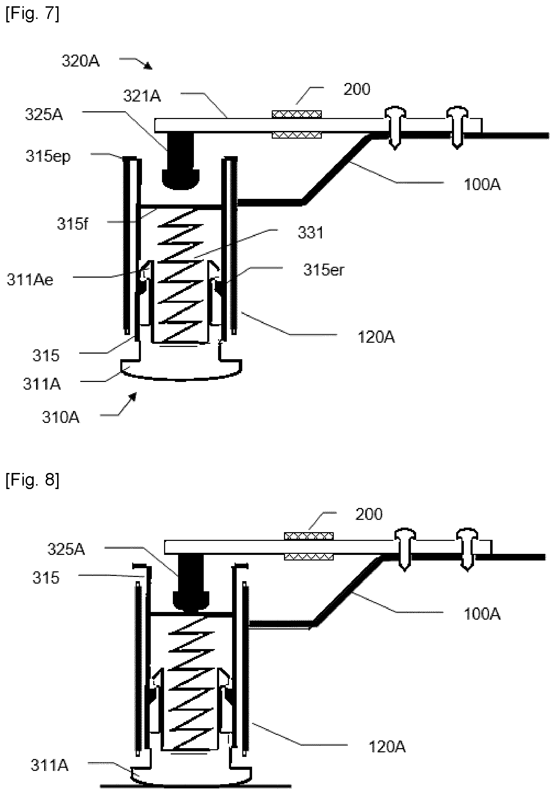

La figure 7 représente un pied d'appui selon une mise en œuvre alternative du mode de réalisation de la figure 3, lorsque l'appareil de préparation culinaire est soulevé du plan de travail.

Selon cette mise en œuvre alternative, le boîtier 100A comprend toujours un puits de pied 120A. Les moyens de suspension comprennent la partie d'ancrage 320A, le ressort de compression 331 et la partie d'appui 310A. La partie d'appui 310A comprenant un patin d'appui 311A, et le ressort de compression 331 sont montés dans une douille mobile 315, montée coulissante dans le puits de pied 120A, et comprenant un fond 315f. La partie d'ancrage 320A comprend un plot d'appui 325A en regard du fond 315f de la douille coulissante 315.

Lorsque l'appareil de préparation culinaire est soulevé du plan de travail comme sur la figure 7, un épaulement supérieur 315ep de la douille coulissante 315 entre en butée avec la surface supérieure du puits de pied 120A. Par ailleurs des ergots 311Ae du patin d'appui 311A sont engagés avec des ergots 315er de la douille mobile 315 pour empêcher le patin d'appui 311 de s'échapper de la douille mobile 315 sous l'action du ressort de compression 331. Aucun effort ne passe dans le barreau de pesée 321A si bien que les moyens de pesée 200 ne sont pas sollicités.

La figure 8 représente la mise en œuvre alternative de la figure 7, lorsque l'appareil de préparation culinaire repose sur plan de travail, sous des conditions normales de chargement. Dans ce cas, le fond 315f de la douille mobile 315 entre en contact avec le plot d'appui 325A et le ressort de compression 331 est légèrement contraint et transmet l'intégralité des efforts au barreau de pesée 321A. Les moyens de pesée peuvent mesurer le poids appliqué à l'appareil.

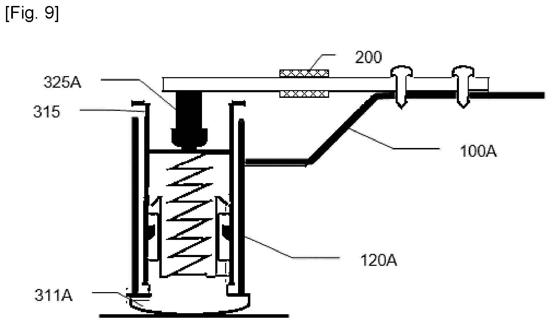

La figure 9 représente la mise en œuvre alternative de la figure 7, lorsque l'appareil de préparation culinaire repose sur le plan de travail, sous des conditions de chargement avec une surcharge. Dans ce cas, la face inférieure du puits de pied 120A entre en butée avec une couronne de la face supérieure du patin d'appui 311A, si bien que la surcharge provoquant cette mise en butée passe par le boîtier 100A et non par la partie d'ancrage 320A des moyens de suspension. Ainsi, le barreau de pesée 321A et les moyens de pesée 200 ne subissent aucune déformation excessive.

En résumé, dans les deux modes de réalisation, les moyens de butée (la surface inférieure du puits de pied et/ou la surface interne latérale du puits de pied) permettent de garantir qu'aucune surcharge allant au-dessus de la force seuil de compression du ressort ne sera appliquée aux moyens de pesée. La force seuil étant celle appliquée par le ressort lors de sa compression maximale autorisée par les moyens de butée.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut noter que le boitier ou une portion de la partie d'ancrage peut très bien être conçue pour entrer en butée avec le plan de travail et non avec la partie d'appui.

Par ailleurs, dans le premier mode de réalisation, la douille 313 pourrait présenter un épaulement supérieur qui s'étend radialement vers l'extérieur pour s'engager avec la portion supérieure du puits de pied 120.

Les moyens de rappel élastiques peuvent être prévus sous forme d'un ressort de compression, ou une lame ressort, ou un ressort à gaz.

En ce qui concerne les moyens de pesée, on peut prévoir tout autre capteur d'effort, ou autre forme pour le barreau de pesée.

## Revendications

1. Appareil de préparation culinaire comprenant :
- un boîtier (100 ; 100A) avec au moins un pied d'appui (30) agencé pour reposer sur un plan de travail,
- une cuve de travail agencée pour recevoir des aliments à préparer,
- des moyens de pesée (200) agencés pour peser des aliments à préparer reçus dans la cuve de travail,
l'au moins un pied d'appui (30) comprenant des moyens de suspension (300) comprenant :
- une partie d'appui (310 ; 310A) sur le plan de travail,
- une partie d'ancrage (320 ; 320A) reliée à une portion de fixation de pied (110) du boîtier (100 ; 100A), et
- des moyens de rappel élastiques disposés entre la partie d'appui (310 ; 310A) et la partie d'ancrage (320 ; 320A),
les moyens de suspension (300) étant agencés pour permettre un débattement de la partie d'appui (310 ; 310A) par rapport à la partie d'ancrage (320 ; 320A),
l'appareil de préparation comprend en outre des moyens de butée pour limiter le débattement de la partie d'appui (310 ; 310A) par rapport à la partie d'ancrage (320 ; 320A),
**caractérisé en ce que** les moyens de pesée (200) sont fixés entre la partie d'appui (310 ; 310A) et la portion de fixation de pied (110) du boîtier (100 ; 100A).

2. Appareil de préparation culinaire selon la revendication 1, dans lequel les moyens de suspension (300) sont agencés pour permettre un débattement axial de la partie d'appui (310 ; 310A) par rapport à la partie d'ancrage (320 ; 320A) selon une direction normale au plan de travail, les moyens de butée comprenant des moyens de butée axiaux pour limiter le débattement axial de la partie d'appui (310 ; 310A) par rapport à la partie d'ancrage (320 ; 320A) au-delà d'une première force prédéterminée, notamment lors d'une surcharge appliquée sur le boîtier (100 ; 100A) ou sur la cuve de travail.

3. Appareil de préparation culinaire selon la revendication 2, dans lequel les moyens de butée axiaux comprennent une partie de butée solidaire du boitier ou de la partie d'ancrage (320 ; 320A), ladite partie de butée étant agencée pour buter sur une portion de la partie d'appui (310 ; 310A) afin de limiter le débattement axial de la partie d'appui (310 ; 310A) relativement à la partie d'ancrage (320 ; 320A).

4. Appareil de préparation culinaire selon la revendication 3, dans lequel la portion de la partie d'appui (310 ; 310A) forme une collerette périphérique définissant un contour de la partie d'appui (310 ; 310A) sur lequel vient buter ladite partie de butée.

5. Appareil de préparation culinaire selon la revendication 2, dans lequel les moyens de butée axiaux comprennent une partie de butée solidaire du boitier ou de la partie d'ancrage (320 ; 320A), ladite partie de butée étant agencée pour buter sur le plan de travail afin de limiter le débattement axial de la partie d'appui (310 ; 310A) relativement à la partie d'ancrage (320 ; 320A).

6. Appareil de préparation culinaire selon l'une des revendications 2 à 5, dans lequel :
- le boîtier (100 ; 100A) ou la partie d'ancrage (320 ; 320A) comprennent un puits de pied formant un habillage au moins partiel pour le pied d'appui (30), avec un contour d'extrémité inférieure (120e) formant les moyens de butée axiaux.

7. Appareil de préparation culinaire selon l'une des revendications 2 à 6, comprenant des moyens de butée axiaux secondaires comprenant :
- une butée secondaire de pied solidaire de la partie d'appui (310 ; 310A),
- une butée secondaire de boîtier solidaire du boîtier (100 ; 100A), la butée secondaire de pied étant agencée pour entrer en butée avec la butée secondaire de boîtier pour limiter le débattement axial de la partie d'appui (310 ; 310A) en dessous d'une deuxième force prédéterminée, notamment lors d'une absence de charge appliquée sur le boîtier (100 ; 100A) ou la cuve de travail.

8. Appareil de préparation culinaire selon la revendication 7, dans lequel la butée secondaire de pied comprend un épaulement agencé pour interagir avec un épaulement de la butée secondaire de boîtier.

9. Appareil de préparation culinaire selon l'une des revendications 1 à 8, dans lequel les moyens de suspension (300) sont agencés pour permettre un débattement latéral de la partie d'appui (310 ; 310A) par rapport à la partie d'ancrage (320 ; 320A) selon une direction latérale ou tangentielle au plan de travail, les moyens de butée comprenant des moyens de butée latéraux entre le pied d'appui (30) et le boîtier (100 ; 100A) pour limiter le débattement latéral de la partie d'appui (310 ; 310A) par rapport à la partie d'ancrage (320 ; 320A), notamment lors d'un déplacement latéral de l'appareil de préparation culinaire sur le plan de travail.

10. Appareil de préparation culinaire selon la revendication 9 dans sa dépendance à la revendication 6, dans lequel les moyens de butée latéraux sont agencés sur la paroi latérale du puits de pied du boitier ou de la partie d'ancrage (320 ; 320A), la partie d'appui (310 ; 310A) étant agencée pour buter sur ladite paroi latérale du puits de pied afin de limiter le débattement latéral de la partie d'appui (310 ; 310A) relativement à la partie d'ancrage (320 ; 320A).

11. Appareil de préparation culinaire selon l'une des revendications 1 à 10, dans lequel les moyens de rappel élastiques comprennent un ressort de compression (331) agencé pour exercer un effort de suspension prédéterminé pour repousser la partie d'appui (310 ; 310A) de la partie d'ancrage (320 ; 320A) selon une direction normale au plan de travail.

12. Appareil de préparation culinaire selon la revendication 11, dans lequel la partie d'ancrage (320 ; 320A) comprend un logement axial pour le ressort de compression (331), et le ressort de compression (331) forme un logement ou un positionnement pour une partie supérieure de la partie d'appui (310 ; 310A), ces éléments étant agencés pour imposer une position neutre ou position d'équilibre à la partie d'appui (310 ; 310A) relativement à la partie d'ancrage (320 ; 320A), selon au moins une direction latérale ou tangentielle au plan de travail.

13. Appareil de préparation culinaire selon l'une des revendications 11 à 12, dans lequel le ressort de compression (331) est agencé entre les moyens de pesée (200) et la partie d'appui (310 ; 310A).

14. Appareil de préparation culinaire selon l'une des revendications 1 à 13, dans lequel la partie d'ancrage (320 ; 320A) comprend au moins un barreau de pesée (321 ; 321A) agencé pour se déformer en flexion lors de l'application d'une charge sur le boîtier (100 ; 100A) ou la cuve de travail.

15. Appareil de préparation culinaire selon la revendication 14, dans lequel le barreau de pesée (321 ; 321A) est directement fixé sur la portion de fixation de pied (110) du boîtier (100 ; 100A).

16. Appareil de préparation culinaire selon l'une des revendications 1 à 15, dans lequel les moyens de pesée (200) comprennent au moins une jauge de contrainte ou un capteur d'effort, ou un capteur piézoélectrique.

17. Appareil de préparation culinaire selon l'une des revendications 1 à 16, comprenant des moyens de travail comprenant au moins un outil de travail et un moteur d'entraînement agencé pour entraîner l'outil de travail en mouvement dans la cuve de travail de sorte à travailler les aliments à préparer reçus dans la cuve de travail, et/ou des moyens de cuisson agencés pour cuire ou chauffer les aliments à préparer reçus dans la cuve de travail.

## Patentansprüche

1. Küchenzubereitungsgerät, umfassend:
• ein Gehäuse (100; 100A) mit mindestens einem Abstützfuß (30), der dafür eingerichtet ist, auf einer Arbeitsfläche aufzuliegen,
• eine Arbeitsbehälter, der dafür eingerichtet ist, aufzubereitende Lebensmittel aufzunehmen,
• Wägmittel (200), die dafür eingerichtet sind, die im Arbeitsbehälter aufgenommenen aufzubereitenden Lebensmittel zu wiegen,
wobei der mindestens eine Abstützfuß (30) Aufhängungsmittel (300) umfasst, die umfassen:
• ein Auflageteil (310; 310A) auf der Arbeitsfläche,
• ein Verankerungsteil (320; 320A), das mit einem fußbefestigenden Abschnitt (110) des Gehäuses (100; 100A) verbunden ist, und
• elastische Rückstellmittel, die zwischen dem Auflageteil (310; 310A) und dem Verankerungsteil (320; 320A) angeordnet sind,
wobei die Aufhängungsmittel (300) so eingerichtet sind, dass sie einen Ausschlag des Auflageteils (310; 310A) relativ zum Verankerungsteil (320; 320A) ermöglichen, wobei das Küchenzubereitungsgerät ferner Anschlagmittel zum Begrenzen des Ausschlags des Auflageteils (310; 310A) relativ zum Verankerungsteil (320; 320A) umfasst,
**dadurch gekennzeichnet, dass** die Wägmittel (200) zwischen dem Auflageteil (310; 310A) und dem fußbefestigenden Abschnitt (110) des Gehäuses (100; 100A) befestigt sind.

2. Küchenzubereitungsgerät nach Anspruch 1, wobei die Aufhängungsmittel (300) so eingerichtet sind, dass sie einen axialen Ausschlag des Auflageteils (310; 310A) relativ zum Verankerungsteil (320; 320A) entlang einer zur Arbeitsfläche normalen Richtung ermöglichen, wobei die Anschlagmittel axiale Anschlagmittel zum Begrenzen des axialen Ausschlags des Auflageteils (310; 310A) relativ zum Verankerungsteil (320; 320A) über eine erste vorbestimmte Kraft hinaus umfassen, insbesondere bei einer Überlast, die auf das Gehäuse (100; 100A) oder auf den Arbeitsbehälter ausgeübt wird.

3. Küchenzubereitungsgerät nach Anspruch 2, wobei die axialen Anschlagmittel ein mit dem Gehäuse oder dem Verankerungsteil (320; 320A) fest verbundenes Anschlagteil umfassen, wobei das Anschlagteil so eingerichtet ist, dass es an einem Abschnitt des Auflageteils (310; 310A) anschlägt, um den axialen Ausschlag des Auflageteils (310; 310A) relativ zum Verankerungsteil (320; 320A) zu begrenzen.

4. Küchenzubereitungsgerät nach Anspruch 3,
wobei der Abschnitt des Auflageteils (310; 310A) einen umlaufenden Kragen bildet, der eine Kontur des Auflageteils (310; 310A) definiert, an dem das genannte Anschlagteil anschlägt.

5. Küchenzubereitungsgerät nach Anspruch 2, wobei die axialen Anschlagmittel ein mit dem Gehäuse oder dem Verankerungsteil (320; 320A) fest verbundenes Anschlagteil umfassen, wobei das Anschlagteil so eingerichtet ist, dass es an der Arbeitsfläche anschlägt, um den axialen Ausschlag des Auflageteils (310; 310A) relativ zum Verankerungsteil (320; 320A) zu begrenzen.

6. Küchenzubereitungsgerät nach einem der Ansprüche 2 bis 5, wobei:
• das Gehäuse (100; 100A) oder das Verankerungsteil (320; 320A) einen Fußschacht umfasst, der eine zumindest teilweise Verkleidung für den Abstützfuß (30) bildet, mit einer unteren Endkontur (120e), die die axialen Anschlagmittel bildet.

7. Küchenzubereitungsgerät nach einem der Ansprüche 2 bis 6, umfassend sekundäre axiale Anschlagmittel, die umfassen:
• einen sekundären Fußanschlag, der fest mit dem Auflageteil (310; 310A) verbunden ist,
• einen sekundären Gehäuseanschlag, der fest mit dem Gehäuse (100; 100A) verbunden ist,
wobei der sekundäre Fußanschlag so eingerichtet ist, dass er mit dem sekundären Gehäuseanschlag in Anschlag kommt, um den axialen Ausschlag des Auflageteils (310; 310A) unterhalb einer zweiten vorbestimmten Kraft zu begrenzen, insbesondere bei einer abwesenden Last, die auf das Gehäuse (100; 100A) oder den Arbeitsbehälter ausgeübt wird.

8. Küchenzubereitungsgerät nach Anspruch 7, wobei der sekundäre Fußanschlag eine Schulter umfasst, die dazu eingerichtet ist, mit einer Schulter des sekundären Gehäuseanschlags zusammenzuwirken.

9. Küchenzubereitungsgerät nach einem der Ansprüche 1 bis 8, wobei die Aufhängungsmittel (300) so eingerichtet sind, dass sie einen lateralen Ausschlag des Auflageteils (310; 310A) relativ zum Verankerungsteil (320; 320A) entlang einer zur Arbeitsfläche lateralen oder tangentialen Richtung ermöglichen, wobei die Anschlagmittel laterale Anschlagmittel zwischen dem Abstützfuß (30) und dem Gehäuse (100; 100A) zum Begrenzen des lateralen Ausschlags des Auflageteils (310; 310A) relativ zum Verankerungsteil (320; 320A) umfassen, insbesondere bei einer lateralen Bewegung des Küchenzubereitungsgeräts auf der Arbeitsfläche.

10. Küchenzubereitungsgerät nach Anspruch 9 in seiner Abhängigkeit von Anspruch 6, wobei die lateralen Anschlagmittel an der Seitenwand des Fußschachts des Gehäuses oder des Verankerungsteils (320; 320A) angeordnet sind, wobei das Auflageteil (310; 310A) so eingerichtet ist, dass es an der genannten Seitenwand des Fußschachts anschlägt, um den lateralen Ausschlag des Auflageteils (310; 310A) relativ zum Verankerungsteil (320; 320A) zu begrenzen.

11. Küchenzubereitungsgerät nach einem der Ansprüche 1 bis 10, wobei die elastischen Rückstellmittel eine Druckfeder (331) umfassen, die dafür eingerichtet ist, eine vorbestimmte Federkraft auszuüben, um das Auflageteil (310; 310A) entlang einer zur Arbeitsfläche normalen Richtung vom Verankerungsteil (320; 320A) wegzudrücken.

12. Küchenzubereitungsgerät nach Anspruch 11, wobei das Verankerungsteil (320; 320A) eine axiale Aufnahme für die Druckfeder (331) umfasst und die Druckfeder (331) eine Aufnahme oder Positionierung für einen oberen Teil des Auflageteils (310; 310A) bildet, wobei diese Elemente so eingerichtet sind, dass sie dem Auflageteil (310; 310A) relativ zum Verankerungsteil (320; 320A) entlang mindestens einer zur Arbeitsfläche lateralen oder tangentialen Richtung eine Neutralstellung oder Gleichgewichtsstellung vorgeben.

13. Küchenzubereitungsgerät nach einem der Ansprüche 11 bis 12, wobei die Druckfeder (331) zwischen den Wägmitteln (200) und dem Auflageteil (310; 310A) angeordnet ist.

14. Küchenzubereitungsgerät nach einem der Ansprüche 1 bis 13, wobei das Verankerungsteil (320; 320A) mindestens einen Wägebalken (321; 321A) umfasst, der dafür eingerichtet ist, sich bei Ausübung einer Last auf das Gehäuse (100; 100A) oder den Arbeitsbehälter durchzubiegen.

15. Küchenzubereitungsgerät nach Anspruch 14, wobei der Wägebalken (321; 321A) direkt an dem fußbefestigenden Abschnitt (110) des Gehäuses (100; 100A) befestigt ist.

16. Küchenzubereitungsgerät nach einem der Ansprüche 1 bis 15, wobei die Wägmittel (200) mindestens einen Dehnungsmessstreifen oder einen Kraftsensor oder einen piezoelektrischen Sensor umfassen.

17. Küchenzubereitungsgerät nach einem der Ansprüche 1 bis 16, umfassend Arbeitsmittel, die mindestens ein Arbeitswerkzeug und einen Antriebsmotor umfassen, der dafür eingerichtet ist, das Arbeitswerkzeug in dem Arbeitsbehälter in Bewegung zu versetzen, um die im Arbeitsbehälter aufgenommenen aufzubereitenden Lebensmittel zu bearbeiten, und/oder Kochmittel, die dafür eingerichtet sind, die im Arbeitsbehälter aufgenommenen aufzubereitenden Lebensmittel zu garen oder zu erhitzen.

## Claims

1. Food preparation appliance comprising:
• a housing (100; 100A) with at least one support foot (30) arranged to rest on a work surface,
• a working bowl arranged to receive foodstuffs to be prepared,
• weighing means (200) arranged to weigh foodstuffs to be prepared received in the working bowl,
the at least one support foot (30) comprising suspension means (300) comprising:
• a support part (310; 310A) on the work surface,
• an anchoring part (320; 320A) connected to a foot-fixing portion (110) of the housing (100; 100A), and
• elastic return means arranged between the support part (310; 310A) and the anchoring part (320; 320A),
the suspension means (300) being arranged to allow a deflection of the support part (310; 310A) relative to the anchoring part (320; 320A),
the food preparation appliance further comprising stop means for limiting the deflection of the support part (310; 310A) relative to the anchoring part (320; 320A), **characterized in that** the weighing means (200) are fixed between the support part (310; 310A) and the foot-fixing portion (110) of the housing (100; 100A).

2. Food preparation appliance according to claim 1, wherein the suspension means (300) are arranged to allow an axial deflection of the support part (310; 310A) relative to the anchoring part (320; 320A) along a direction normal to the work surface, the stop means comprising axial stop means for limiting the axial deflection of the support part (310; 310A) relative to the anchoring part (320; 320A) beyond a first predetermined force, in particular when an overload is applied to the housing (100; 100A) or to the working bowl.

3. Food preparation appliance according to claim 2, wherein the axial stop means comprise a stop part secured to the housing or to the anchoring part (320; 320A), said stop part being arranged to abut against a portion of the support part (310; 310A) in order to limit the axial deflection of the support part (310; 310A) relative to the anchoring part (320; 320A).

4. Food preparation appliance according to claim 3, wherein the portion of the support part (310; 310A) forms a peripheral collar defining a contour of the support part (310; 310A) on which said stop part comes to abut.

5. Food preparation appliance according to claim 2, wherein the axial stop means comprise a stop part secured to the housing or to the anchoring part (320; 320A), said stop part being arranged to abut against the work surface in order to limit the axial deflection of the support part (310; 310A) relative to the anchoring part (320; 320A).

6. Food preparation appliance according to any one of claims 2 to 5, wherein:
• the housing (100; 100A) or the anchoring part (320; 320A) comprise a foot well forming at least a partial fairing for the support foot (30), with a lower end contour (120e) forming the axial stop means.

7. Food preparation appliance according to any one of claims 2 to 6, comprising secondary axial stop means comprising:
• a secondary foot stop secured to the support part (310; 310A),
• a secondary housing stop secured to the housing (100; 100A),
the secondary foot stop being arranged to come into abutment with the secondary housing stop to limit the axial deflection of the support part (310; 310A) below a second predetermined force, in particular when no load is applied to the housing (100; 100A) or the working bowl.

8. Food preparation appliance according to claim 7, wherein the secondary foot stop comprises a shoulder arranged to interact with a shoulder of the secondary housing stop.

9. Food preparation appliance according to any one of claims 1 to 8, wherein the suspension means (300) are arranged to allow a lateral deflection of the support part (310; 310A) relative to the anchoring part (320; 320A) along a lateral or tangential direction to the work surface, the stop means comprising lateral stop means between the support foot (30) and the housing (100; 1 OOA) for limiting the lateral deflection of the support part (310; 310A) relative to the anchoring part (320; 320A), in particular during a lateral movement of the food preparation appliance on the work surface.

10. Food preparation appliance according to claim 9 in its dependency on claim 6, wherein the lateral stop means are arranged on the lateral wall of the foot well of the housing or of the anchoring part (320; 320A), the support part (310; 310A) being arranged to abut against said lateral wall of the foot well in order to limit the lateral deflection of the support part (310; 310A) relative to the anchoring part (320; 320A).

11. Food preparation appliance according to any one of claims 1 to 10, wherein the elastic return means comprise a compression spring (331) arranged to exert a predetermined suspension force to push the support part (310; 310A) away from the anchoring part (320; 320A) along a direction normal to the work surface.

12. Food preparation appliance according to claim 11, wherein the anchoring part (320; 320A) comprises an axial housing for the compression spring (331), and the compression spring (331) forms a housing or a positioning for an upper part of the support part (310; 310A), these elements being arranged to impose a neutral position or equilibrium position on the support part (310; 310A) relative to the anchoring part (320; 320A), along at least one lateral or tangential direction to the work surface.

13. Food preparation appliance according to any one of claims 11 to 12, wherein the compression spring (331) is arranged between the weighing means (200) and the support part (310; 310A).

14. Food preparation appliance according to any one of claims 1 to 13, wherein the anchoring part (320; 320A) comprises at least one weighing bar (321; 321A) arranged to deform in bending when a load is applied to the housing (100; 100A) or the working bowl.

15. Food preparation appliance according to claim 14, wherein the weighing bar (321; 321A) is directly fixed to the foot-fixing portion (110) of the housing (100; 100A).

16. Food preparation appliance according to any one of claims 1 to 15, wherein the weighing means (200) comprise at least one strain gauge or a force sensor, or a piezoelectric sensor.

17. Food preparation appliance according to any one of claims 1 to 16, comprising working means comprising at least one working tool and a drive motor arranged to drive the working tool in motion in the working bowl so as to work the foodstuffs to be prepared received in the working bowl, and/or cooking means arranged to cook or heat the foodstuffs to be prepared received in the working bowl.
